# EUROPEAN PATENT APPLICATION

(11) **EP 1 075 132 A1**
(43) Date of publication of application: **07.02.2001**
(21) Application number: 00306305.4
(22) Date of filing: 24.07.2000
(51) Int. Cl.: H04M 7/00, H04M 3/533, H04M 11/06

(54) **Integrated voice and data call management system**

(30) Priority: 06.08.1999 US 369553
(71) Applicant: LUCENT TECHNOLOGIES INC., Murray Hill, New Jersey 07974-0636 (US)
(72) Inventor: Bates, Mavis A., Aurora, Illinois 60506 (US); Bushnell, William Jackson, St. Charles, Illinois 60174 (US); Montgomery, Warren Alan, Dekalb, Illinois 60115 (US)
(74) Representative: Watts, Christopher Malcolm Kelway, Dr.

(57) **Abstract**

The integrated voice and data call management system uses the subscriber's existing basic telephone station set and the subscriber's personal computer or other data terminal device to provide the subscriber with access to both advanced communication services and the data Which relates to these advanced communication services. This is accomplished by enhancing the voice features provided for the telephone station set with a data connection to that is capable of exchanging communication services data between the subscriber's data terminal device and the telephone switching network. The telephone switching network typically maintains data communications with the subscriber terminal device via an "always on" data connection, which enables the subscriber to manage communications connections for their telephone station set. This call management system unifies multiple service needs in the field of concurrent voice and data communication capabilities, by managing the voice and data communication suites as a set of integrated capabilities. The subscriber can additionally program call management features into the system to address the unique needs of the subscriber, since the communication services data is available to the subscriber.

## Description

### Field of the Invention

This invention relates to communications connections, such as an Asymmetric Digital Subscriber Line which multiplexes data over a subscriber voice frequency communication facility to provide both high-speed data transport and traditional Plain Old Telephone Service (POTS) over the same physical medium and, in particular, to the provision of advanced call management features for the subscriber telephone station set, where these advanced services can be implemented using servers that are located in the network and are shared across many users.

### Problem

It is a problem in the field of subscriber communications that a subscriber has a limited number of predefined options to obtain voice and data services, with the choices being primarily limited to the use of the standard subscriber line for either voice or data communications, or the use of additional communication facilities to obtain concurrent voice and data communication capabilities. In both instances, the subscriber is further limited by the nature of the telephone station set, such that the subscriber who has a basic telephone station set can only obtain a predefined suite of limited common carrier communication services for the subscriber line. Alternatively, the subscriber must invest in an expensive telephone station set to obtain a more sophisticated predefined suite of common carrier communication services. In all of these cases, the subscriber can only obtain access to predefined communication services as offered by the common carrier and the subscriber is unable to obtain additional communication management functions without the purchase of ancillary communication equipment.

In the field of data communication services, the subscriber has been limited to the use of the standard telephone line for both voice communication services and data communication services, with each service precluding the other, or the use of additional communication facilities, such as a partial T1 line, or multiple telephone lines, or an Integrated Services Digital Network (ISDN) line to obtain the ability to have concurrent voice and data communication capability. A recent improvement in this data communication services area has been the provision of high-speed access to data networks, such as Local Area Networks or the Internet, by the use of Asymmetric Digital Subscriber Lines. An Asymmetric Digital Subscriber Line provides a data over voice communication capability using frequency multiplexing to provide both high-speed data transport and traditional Plain Old Telephone Service (POTS) over the same physical medium, whether a standard voice line or a cable communication facility. The data transport protocol provided by Asymmetric Digital Subscriber Lines represents an "Always On" continuous connection to the data network, such as a corporate Local Area Network or Internet.

However, the Asymmetric Digital Subscriber Line represents an improvement in the provision of concurrent voice and data communication capabilities, with the two communication suites being managed as disjunct capabilities. The Asymmetric Digital Subscriber Line is not architected to provide advanced call management features for the subscriber's voice communication connections and the subscriber is therefore still limited to the predefined voice communication services provided by the common carrier as noted above. Therefore, while advances have been made in the provision of communication bandwidth to the subscriber line, and the provision of advanced communication services to the subscriber who is equipped with an expensive feature-rich telephone station set, the subscriber who elects not to invest in such a feature-rich telephone station set is precluded from obtaining any advanced call management features for the subscriber's voice communication connections.

### Solution

The above described problems are solved and a technical advance achieved by the present integrated voice and data call management system. This call management system uses the subscriber's existing basic telephone station set and the subscriber's personal computer or other data terminal device to provide the subscriber with access to both advanced communication services and the data which relates to these advanced communication services. This is accomplished by enhancing the voice features provided for the telephone station set with a data connection to that is capable of exchanging communication services data between the subscriber's data terminal device and the telephone switching network. The telephone switching network typically maintains data communications with the subscriber terminal device via an "always on" data connection, which enables the subscriber to manage communications connections for their telephone station set. This call management system unifies multiple service needs in the field of concurrent voice and data communication capabilities, by managing the voice and data communication suites as a set of integrated capabilities. The subscriber can additionally program call management features into the system to address the unique needs of the subscriber, since the communication services data is available to the subscriber.

There are numerous methods of implementing such an architecture and the present description illustrates the use of the Asymmetric Digital Subscriber Line data transmission capability. The Asymmetric Digital Subscriber Line call management system uses the Asymmetric Digital Subscriber Line data connection to provide advanced call management features for the associated standard telephone station set. The subscriber's personal computer and the Asymmetric Digital Subscriber Line data connection interact with data network based servers, which are shared by many users, to provide a variety of advanced call management services. The personal computer is always connected to the Asymmetric Digital Subscriber Line since it doesn't use the telephone line voice communication connection. When the subscriber activates a call management feature on their personal computer, the data transmission from the personal computer is forwarded to the data network server, via the Asymmetric Digital Subscriber Line data connection, where it initiates the provision of a call management service and the associated voice communication connections in the Public Switched Telephone Network. This allows a work at home subscriber to have access to call management features normally found in a large office environment without having to purchase expensive telephone station sets. The ability to use Asymmetric Digital Subscriber Line to provide both high speed data and advanced call management services can be a significant market advantage for Local Exchange Carriers as they try to compete against the high speed, data only service which is provided by competing cable modem services.

The use of this architecture is directly extensible to the field of Local Area Networks (LAN), where the LAN provides the data communication connection between the subscribers terminal device and a network based server which provides the advanced call management services. Other transmission modalities include: the use of a pair of telephone lines, one for providing service to the telephone station set and one to provide the data communication connection; the use of a telephone line for providing service to the telephone station set and the use of a cable modem to provide the data communication connection; the use of an ISDN link which is managed to provide service to the telephone station set, with the D-Channel being used to provide the data communication connection. These noted implementations represent obvious alternatives to that described in detail herein and it is expected that other implementations of this architecture can be envisioned, which fall within the expected scope of this architecture.

### Brief Description Of The Drawing

Figure 1 illustrates in block diagram form the overall architecture of the present integrated voice and data call management system as implemented in a typical embodiment of the Public Switched Telephone Network;
Figure 2 illustrates in flow diagram form the operation of the present integrated voice and data call management system as implementing the Click to Dial Feature;
Figure 3 illustrates in flow diagram form the operation of the present integrated voice and data call management system as implementing the Voice Mail Feature;
Figure 4 illustrates in flow diagram form the operation of the present integrated voice and data call management system as implementing the Caller ID and Audible Caller ID Features;
Figure 5 illustrates in flow diagram form the operation of the present integrated voice and data call management system as implementing the Call Waiting Dispatch Feature;
Figure 6 illustrates in flow diagram form the operation of the present integrated voice and data call management system as implementing the Auto Callback and Auto Recall Service Features; and
Figure 7 illustrates in flow diagram form the operation of the present integrated voice and data call management system as implementing the Conference Call Management Feature.

### Detailed Description

### Communications Network with ADSL Based Call Management System

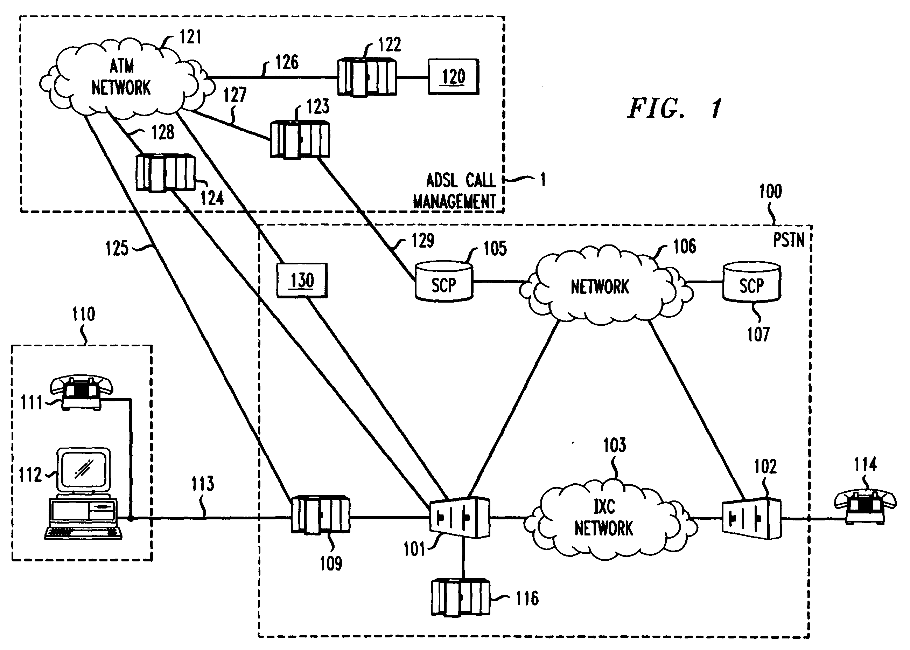

Figure 1 illustrates in block diagram form the architecture of a typical communications network 100 that is equipped with the present integrated voice and data call management system 1. In particular, the communications network 100 comprises a traditional voice communications network that includes a plurality of local communications systems 101-102, such as telephone switching systems that are part of the Public Switched Telephone Network (PSTN) and are interconnected via trunk circuits to an Interexchange Carrier System (IXC) 103. Each of the communications systems 101, 102 serve a plurality of terminal devices 110, 114, and the communications systems 101, 102 may be interconnected via an out of band signaling link using the well known SS7 signaling protocol. The out of band signaling link interconnects the local communications systems 101, 102 with SS7 signaling network 106, which serves to interface the Service Control Points 105, 107 (associated with local communications systems 101, 102) that function to regulate the operation of local communications systems 101, 102 with regard to the provision of call management features. The operation of such a communications network 100 is well known in the art and is not described in detail herein. The communications systems 101, 102 provide a set of features and services to the terminal devices 110, 114 that they serve.

The present integrated voice and data call management system 1 is connected to and is cooperatively operative with the above-described communication network 100 to provide subscribers with advanced call management features. This is accomplished by enhancing the voice features provided for the telephone station set with a data connection to that is capable of exchanging communication services data between the subscriber's data terminal device and the telephone switching network. The telephone switching network typically maintains data communications with the subscriber terminal device via an "always on" data connection, which enables the subscriber to manage communications connections for their telephone station set. In the present example, the subscriber is equipped with an Asymmetric Digital Subscriber Line 113 which serves to interconnect the subscriber's telephone station set 111 and personal computer 112 (where the telephone station set 111 and personal computer 112 conceptually can also be embodied in a single device) with a Digital Subscriber Line Access Multiplexer. The Digital Subscriber Line Access Multiplexer operates in well known fashion to provide a data over voice communication capability using frequency multiplexing to provide both high-speed data transport and traditional Plain Old Telephone Service (POTS) over the same physical medium, whether a standard voice line or a cable communication facility. The Digital Subscriber Line Access Multiplexer is connected via data link 125 to Asynchronous Transfer Mode network 121, which interconnects a plurality of servers 122-124, as described in more detail below via respective data links 126-128.

Asynchronous Transfer Mode (ATM) is a packet oriented data transfer mode that uses an asynchronous time division multiplexing technique. The term "transfer mode" refers to a set of methods which cover transmission, multiplexing, and switching in a telecommunications environment. Asynchronous Transfer Mode networks carry telephony, video and data services over a single communications network. The Asynchronous Transfer Mode transport network is divided into two layers: an ATM Layer which involves the switching aspects of the network and the Physical Layer which involves the transmission aspects. The ATM Layer implements on demand establishment of connections between endpoints to transmit the required message(s). Therefore, the message originating party can be connected to the ATM Network, but does not consume transmission capacity until a message is originated to a designated destination.

### Asymmetric Digital Subscriber Line Call Management Services

The Integrated voice and data call management system 1 includes a set of call management processes 120 that are resident on the data network server 123 and which use the subscriber's existing basic telephone station set 111 and the subscriber's personal computer 112 to provide the subscriber with access to both advanced communication services and the data which relates to these advanced communication services. The Integrated voice and data call management system 1 interfaces and/or includes processes resident on the subscriber's personal computer 112 which provide the user interface to enable the subscriber to access the call management features and/or program additional call management features. This is accomplished by enhancing the voice features provided for the telephone station set with the Asymmetric Digital Subscriber Line data transmission capability. This call management system 1 unifies multiple service needs in the field of concurrent voice and data communication capabilities, by managing the voice and data communication suites provided by the associated communication network 100 and ATM network 121 as a set of integrated capabilities. The subscriber can additionally program call management features into the system to address the unique needs of the subscriber, since the communication services data is available to the subscriber.

The Asymmetric Digital Subscriber Line call management system 1 uses the Asymmetric Digital Subscriber Line data connection to provide advanced call management features for the associated standard telephone station set 111. The subscriber's personal computer 112 and the Asymmetric Digital Subscriber Line data connection interact with data network based servers 122-124, which are shared by many users, to provide a variety of advanced call management services. The personal computer 112 is always connected to the Asymmetric Digital Subscriber Line 113 since it doesn't use the telephone line voice communication connection. When the subscriber activates a call management feature on their personal computer 112, the data transmission from the personal computer 112 is forwarded to the data network server 122, via the Asymmetric Digital Subscriber Line data connection, where it initiates the provision of a call management service and the associated voice communication connections in the Public Switched Telephone Network 100.

The subscriber's personal computer 112 and Asymmetric Digital Subscriber Line data connection can be used to interact with network based servers to provide a variety of services. These include, but are not limited to:
Click to Dial/Usage Monitoring/Call Detail Recording
Voice Mail Management & Click to Add to Speed Dialing from Voice Mail
Caller Identification & Click to Add Speed Dialing
Call Waiting Dispatch
Auto Call Back and Auto Recall
Conference Call Management
These features are described below in reference to the system architecture block diagram of Figure 1.

### Click to Dial

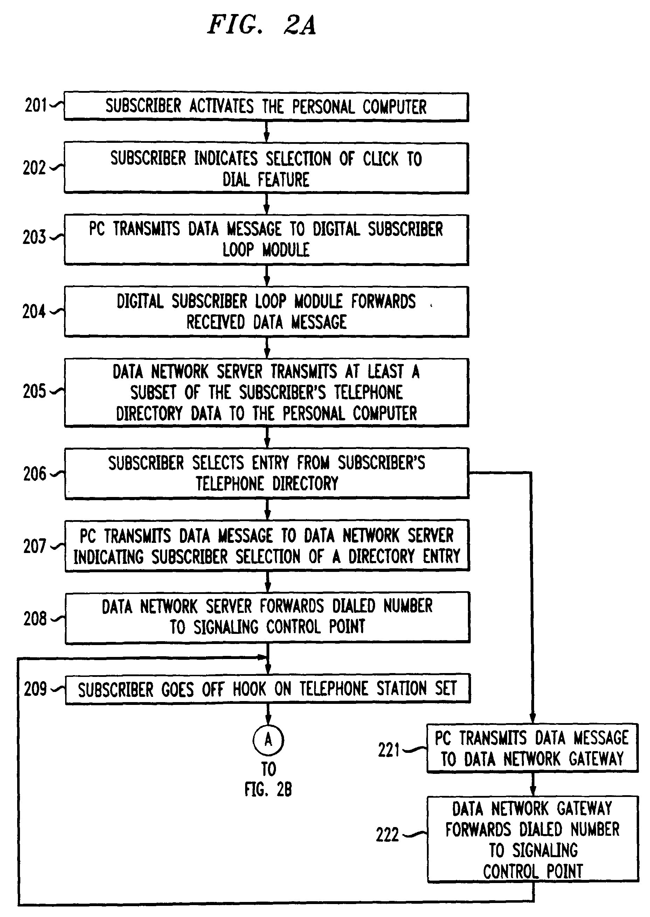

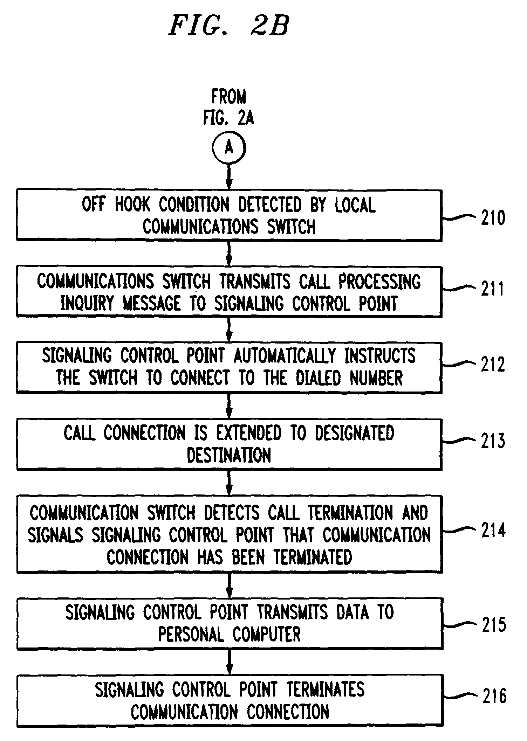

As shown in flow diagram form in Figure 2, the present Integrated voice and data call management system, as implemented in a typical embodiment of the Public Switched Telephone Network shown in Figure 1, enables the subscriber to create and store a speed calling list with names and numbers that can be displayed on the personal computer 112. This is accomplished when the subscriber at step 201 activates the personal computer 112 and clicks on an entry at step 202 indicating selection of the click to dial feature. At step 203, the script programmed into personal computer 112 executes the click to dial accessing process and a data message is transmitted via Asymmetric Digital Subscriber Line 113 data channel to the Digital Subscriber Line Access Multiplexer. The Digital Subscriber Line Access Multiplexer at step 204 forwards the received data message via data link 125 and ATM network 121 to data network server 122. At step 205, the data network server 122 responds to the received data message indicative of a subscriber activation of the click to dial feature by transmitting at least a subset of the subscriber's telephone directory data to the personal computer 112 over the data transmission path just described which links the personal computer 112 with the data network server 122. The subscriber selects an entry from the subscriber's telephone directory at step 206, either interactively using data network server 122 or by excerpting the selection from the data received from data network server 122, and the selection is transmitted to the Service Control Point 105 associated with communications switch 101 that serves the subscriber communication line 113. This can be accomplished in two equivalent call dialing processes.

In the first of these call dialing processes, the personal computer 112 transmits a data message over the above-noted data path to the data network server 122 indicating the subscriber selection of a directory entry at step 207. At step 208 the data network server 122 forwards the "dialed number" indicated by the subscribers selection to the Service Control Point 105 associated with communications switch 101 via ATM network 121, data link 127, gateway server 123 and data link 129. When the subscriber goes off hook on telephone station set 111 at step 210, this off hook condition is detected by local communications switch 101 in well known fashion. At step 211, the local communications switch 101 transmits a call processing inquiry message to Service Control Point 105 to determine the steps required to process the subscriber off hook condition. At step 212, the Service Control Point 105 automatically transmits the data indicative of the subscriber's selection to the local communications switch 101 and the local communications switch 101 completes the call. The call connection is extended from the subscriber's telephone station set to the designated destination, such as telephone station set 114 at step 213.

Alternatively, in the second of these two call dialing processes, the personal computer 112 transmits a data message over the above-noted data path to the data network gateway 123 indicating the subscriber selection of a directory entry at step 221. The data network gateway 123, at step 222, forwards the "dialed number" indicated by the subscribers selection to the Service Control Point 105 associated with communications switch 101. Call processing then continues through steps 210-213 as described above.

### Usage Monitor/Call Detail Recording

A further extension of the click to dial process of Figure 2 is the ability of the present Integrated voice and data call management system to monitor the minutes of use and approximate charges for outgoing toll calls. In the case where professionals make calls on behalf of their clients, the ability to bill their clients for the cost of the call and the time spent on behalf of their client is greatly beneficial. Today, special call detail recording systems are available for large business subscribers with a dedicated data line to the telephone network or ancillary equipment must be used to generate such data. With Integrated voice and data call management, the local personal computer 112 can receive call detail records that the user can sort by client. The system can also be used to cut off telephone service after a specified maximum usage.

Thus, at step 214, the local communication switch 101 detects call termination and signals the Service Control Point 105 that the communication connection has been terminated. At step 215, the Service Control Point 105 transmits data to the personal computer 112 over the data path need above, indicative of the minutes of use and approximate charges for outgoing call (if any). Alternatively, the Service Control Point 105 at step 216 can automatically terminate the communication connection upon the occurrence of one of a number of predetermined conditions, such as: minutes of use, toll charges for a credit card call, time of day, and the like.

### Voice Mail Management

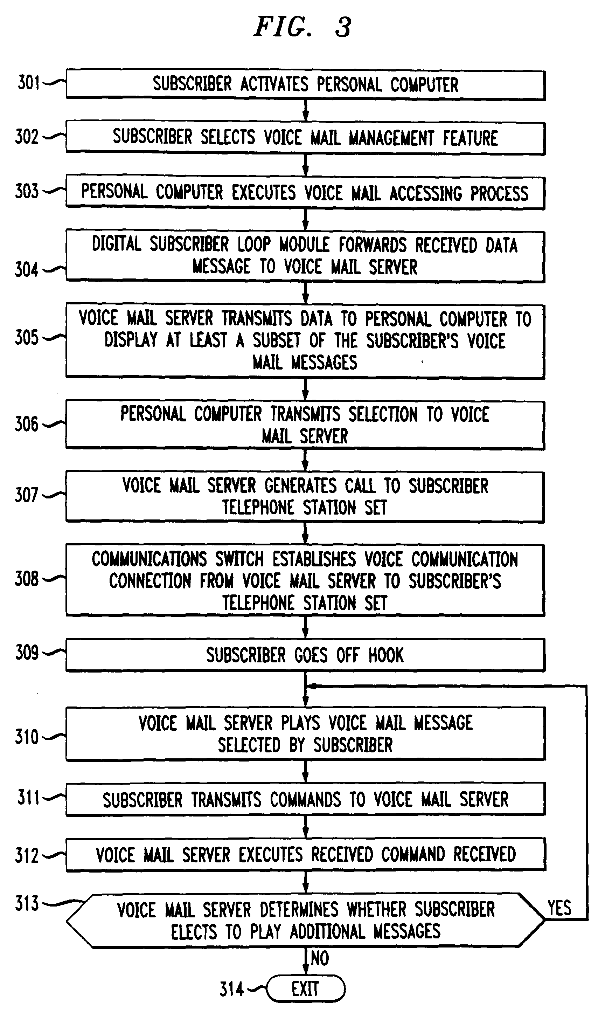

As shown in flow diagram form in Figure 3, the present Integrated voice and data call management system 1, as implemented in a typical embodiment of the Public Switched Telephone Network shown in Figure 1, the subscriber can use their personal computer 112 to access a voice mail server 124, which displays a list of the subscriber's awaiting voice mail messages. The user can select which message they would like to hear, which causes the associated telephone station set 111 to ring. When the user goes off hook on telephone station set 111, the message is played. The personal computer 112 can be used to delete, forward, save, and address new voice mail messages.

This is accomplished when the subscriber at step 301 activates the personal computer 112 and clicks on an entry at step 302 indicating selection of the voice mail management feature. At step 303, the script programmed in the personal computer 112 executes the voice mail accessing process and a data message is transmitted via Asymmetric Digital Subscriber Line 113 data channel to the Digital Subscriber Line Access Multiplexer. The Digital Subscriber Line Access Multiplexer at step 304 forwards the received data message via data link 125 and ATM network 121 to voice mail server 124. At step 305, the voice mail server 124 responds to the received data message indicative of a subscriber activation of the voice mail management feature by transmitting data to personal computer 112 over the data transmission path just described which links the personal computer 112 with the voice mail server 124 to display at least a subset of the subscriber's voice mail messages. The subscriber selects an entry from the subscriber's voice mail listing at step 306 and the selection is transmitted to the voice mail server 124, which generates a call to the subscriber telephone station set 111 at step 307 via associated communications switch 101. The communications switch 101 establishes a voice communication connection from voice mail server 124 at step 308 to the subscriber's telephone station set 111 via Asymmetric Digital Subscriber Line 113. When the subscriber goes off hook on telephone station set 111 at step 309 in response to the incoming call from voice mail server 124, the voice mail server 124 at step 310 plays the voice mail message selected by the subscriber. The subscriber at step 311 can transmit commands to voice mail server 124 via the data link portion of the Asymmetric Digital Subscriber Line 113 to delete, replay or save the voice mail message. At step 312, the voice mail server 124 executes the command received from the subscriber personal computer 112 and at step 313 determines whether the subscriber elects to play additional messages by returning to step 310 or exiting the process at step 314.

### Click to Add to Speed Dialing from Voice Mail

A subscriber can also click on an entry in the list of the subscriber's awaiting voice mail at step 311 and add that message's associated caller identification information to their speed dialing list. This is accomplished by the system displaying an icon on personal computer 112 to indicate the presence of an incoming call. The user can click on this icon to retrieve a menu that lists the various service options that are available to process this incoming call. One of these displayed options is to add the incoming call calling party number to a speed dial list for future simple return of the call. If the user clicks on this menu selection, the service provides a caller name (C-NAME) look-up to add the name of the caller to the subscriber's speed dialing list. This enables the subscriber to return the incoming call without having to remember the calling party's number, since that data is now stored in the speed dialing list.

### Caller Identification

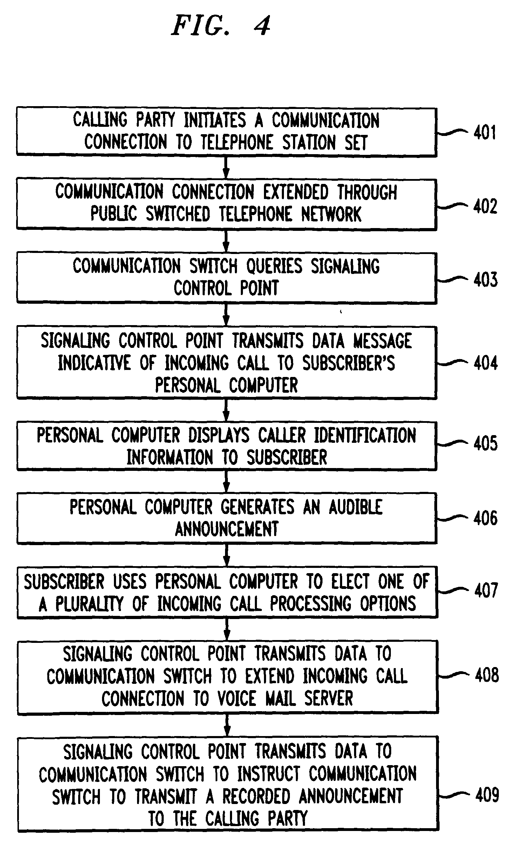

As shown in flow diagram form in Figure 4, the present Integrated voice and data call management system 1, as implemented in a typical embodiment of the Public Switched Telephone Network shown in Figure 1, displays caller identification information on the personal computer 112. This eliminates the need to buy separate caller identification information and the caller identification information can be used to pull up a record on the personal computer 112 on previous discussions or transactions that the subscriber had with the caller.

In operation, a calling party at telephone station set 114 initiates a communication connection at step 401 to the subscriber resident at telephone station set 111. The extension of this communication connection through the Public Switched Telephone Network proceeds in well known fashion at step 402 and the local communication switch 101 at step 403 queries the associated Service Control Point 105 for subscriber specific call processing instructions in response to the call termination request. At step 404, the Service Control Point 105 transmits a data message indicative of the incoming call to the subscriber's personal computer 112 via the gateway server 123, ATM network 121, data link 125, Digital Subscriber Line Access Multiplexer, and Asymmetric Digital Subscriber Line 113. At step 405, the personal computer 112 displays caller identification information to the subscriber. If the personal computer 112 is equipped with a sound card, it can use the information representing the telephone number and name of a calling party to generate an audible announcement at step 406. In a multi-person household, this process also identifies the intended recipient for the call. Concurrently with the transmission of the data message to the personal computer 112, the local communications switch 101 can ring the telephone station set 111 to indicate the presence of an incoming call. At step 407, the subscriber uses the personal computer 112 to elect one of a plurality of incoming call processing options by transmitting a data message to the Service Control Point 105 via the data communication path noted above. In particular, the subscriber can send the incoming call to voice mail server 124, where at step 408 the Service Control Point 105 transmits data to local communication switch 101 to extend the incoming call connection to voice mail server 124. The Service Control Point 105 can optionally concurrently transmit data to the voice mail server 124 via ATM network 121 to provide the voice mail server 124 with the call forwarding data associated with this call connection. Alternatively, the subscriber can activate a recorded announcement, where at step 409 the Service Control Point 105 transmits data to local communication switch 101 to instruct the local communication switch to transmit a recorded announcement to the calling party (such as "Your call has been forwarded ...."). Finally, the subscriber can do nothing until the calling party hangs up.

### Click to Add Speed Dialing

A subscriber can also click on a menu that would allow them to take the caller identification information from an incoming call and add that to their speed dialing list. When an incoming call arrives when the subscriber is engaged in an existing communication connection, an icon is displayed on their personal computer 112 to indicate the presence of an incoming call. The user can click on this icon to retrieve a menu that lists the various service options that are available to process this incoming call. One of these displayed options is to add the incoming call calling party number to a speed dial list for future simple return of the call. If the user clicks on this menu selection, the service provides a caller name (C-NAME) look-up to add the name of the caller to the subscriber's speed dialing list. This enables the subscriber to return the incoming call without having to remember the calling party's number, since that data is now stored in the speed dialing list. This feature can also be implemented as part of the following call waiting dispatch capability.

### Call Waiting Dispatch

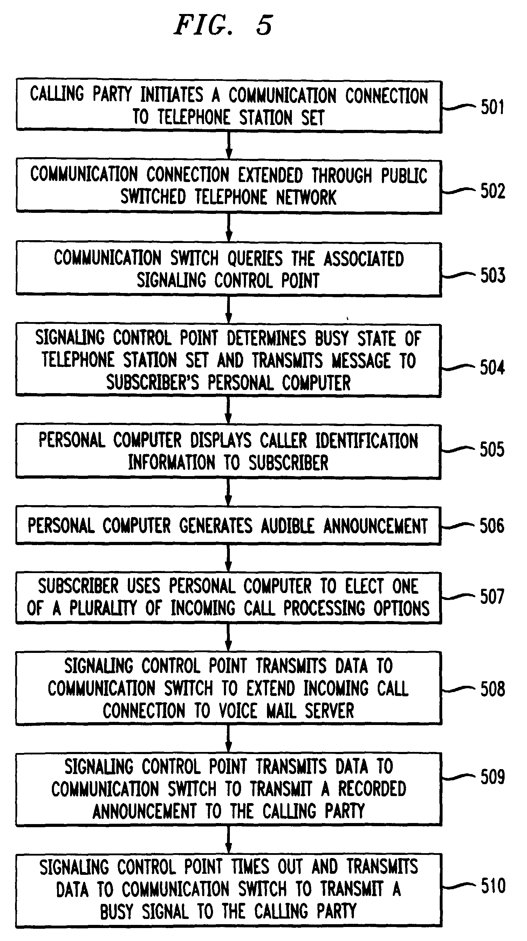

As shown in flow diagram form in Figure 5, the present Integrated voice and data call management system 1, as implemented in a typical embodiment of the Public Switched Telephone Network shown in Figure 1 can alert the subscriber, when the Asymmetric Digital Subscriber Line is busy and another call arrives. The caller identification information is displayed on the personal computer 112 and the subscriber can use the personal computer 112 to provide various call treatments. The treatments include, but are not limited to: ignore the call, send the call to voice mail, play a message asking the caller to hold.

In operation, a calling party at telephone station set 114 initiates a communication connection at step 501 to the subscriber resident at telephone station set 111. The extension of this communication connection through the Public Switched Telephone Network proceeds in well known fashion at step 502 and the local communication switch 101 at step 503 queries the associated Service Control Point 105 for subscriber specific call processing instructions in response to the call termination request. At step 504, the Service Control Point 105 determines the busy state of telephone station set 111 and transmits a data message indicative of the incoming call to the subscriber's personal computer 112 via the gateway server 123, ATM network 121, data link 125, Digital Subscriber Line Access Multiplexer, and Asymmetric Digital Subscriber Line 113. At step 505, the personal computer 112 displays caller identification information to the subscriber. If the personal computer 112 is equipped with a sound card, it can use the information representing the telephone number and name of a calling party to generate an audible announcement at step 506. In a multi-person household, this process also identifies the intended recipient for the call.

At step 507, the subscriber uses the personal computer 112 to elect one of a plurality of incoming call processing options by transmitting a data message to the Service Control Point 105 via the data communication path noted above. In particular, the subscriber can send the incoming call to voice mail server 124, where at step 508 the Service Control Point 105 transmits data to local communication switch 101 to extend the incoming call connection to voice mail server 124. The Service Control Point 105 can optionally concurrently transmit data to the voice mail server 124 via ATM network 121 to provide the voice mail server 124 with the call forwarding data associated with this call connection. Alternatively, the subscriber can activate a recorded announcement, where at step 509 the Service Control Point 105 transmits data to local communication switch 101 to instruct the local communication switch to transmit a recorded announcement to the calling party (such as "Please hold ...."). Finally, the subscriber can do nothing, where at step 510 the Service Control Point 105 times out and transmits data to local communication switch 101 to instruct the local communication switch to transmit a busy signal to the calling party.

### Auto Call Back and Auto Ring Back

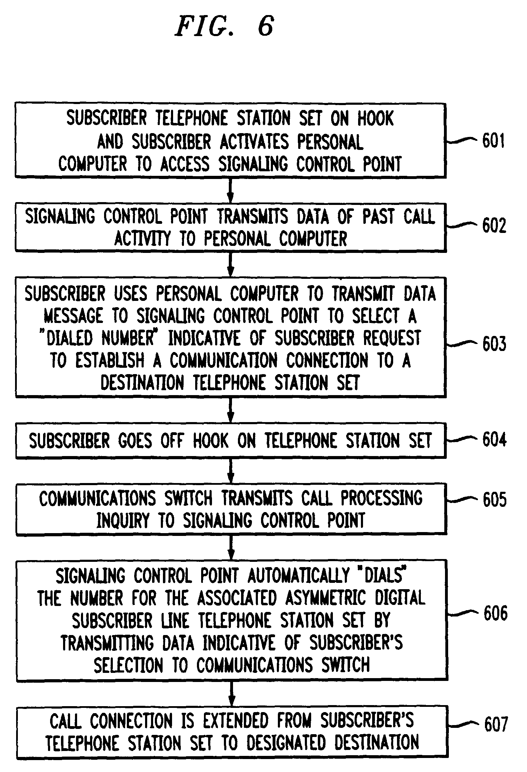

As shown in flow diagram form in Figure 6, the present Integrated voice and data call management system 1, as implemented in a typical embodiment of the Public Switched Telephone Network shown in Figure 1, can provide various features, that are activated at the end of the call by the subscriber going off hook on telephone station set 111 and dialing special codes. Subscribers have difficulty remembering these codes and the personal computer 112 can be used to provide a simple menu of features that the user can activate by clicking on the desired feature on personal computer 112.

In operation, this process can be an extension of one of the call processes described in Figures 2 - 5, where the subscriber has initiated an outgoing call, or has received a voice mail, or has received an incoming call, or has forwarded an incoming call to a busy line. In any of these cases, there is calling party identification data resident in the Service Control Point 105 as a result of the prior call activity. At step 601, the subscriber telephone station set is in an on hook condition and the subscriber activates personal computer 112 to access the Service Control Point 105. At step 602, the Service Control Point 105 transmits data indicative of this past call activity to the personal computer via a data path comprising the gateway server 123, ATM network 121, data link 125, Digital Subscriber Line Access Multiplexer, and Asymmetric Digital Subscriber Line 113. At step 603, the subscriber uses personal computer 112 to initiate auto callback or auto recall service by transmitting a data message to the Service Control Point 105 via this data path to select a "dialed number" indicative of the subscriber request to establish a communication connection to a destination telephone station set (such as 114) selected by the subscriber. When the subscriber goes off hook on telephone station set 111 at step 604, this off hook condition is detected by local communications switch 101 in well known fashion. At step 605, the local communications switch 101 transmits a call processing inquiry message to Service Control Point 105 to determine the steps required to process the subscriber off hook condition. At step 606, the Service Control Point 105 instructs switch 101 to dial the number for the associated Asymmetric Digital Subscriber Line telephone station set 114. The call connection is then extended from the subscriber's telephone station set to the designated destination, at step 607.

### Conference Call Management

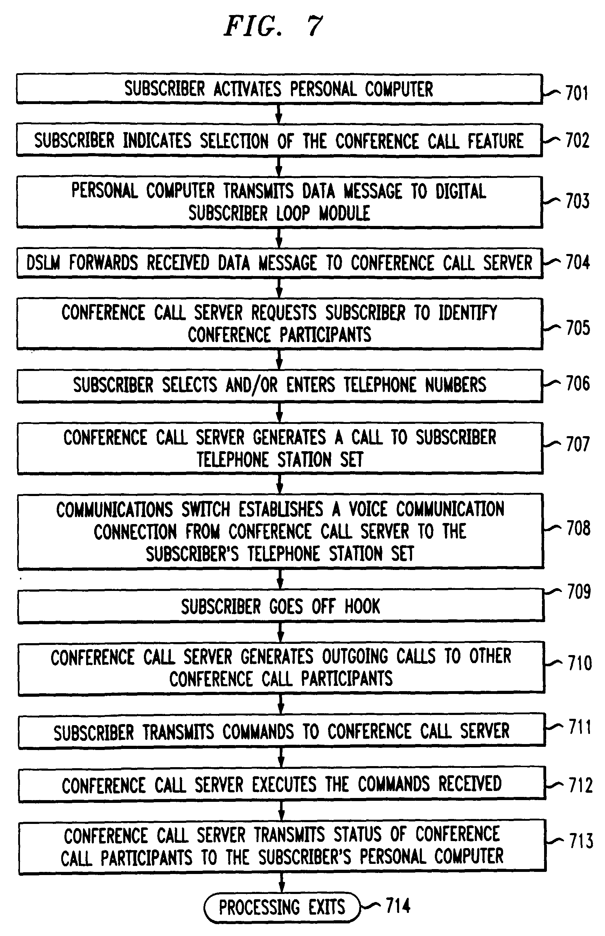

As shown in flow diagram form in Figure 7, the present Integrated voice and data call management system, as implemented in a typical embodiment of the Public Switched Telephone Network shown in Figure 1, with an analog telephone, a conference bridge is controlled by flashing the switch hook, listening for stutter dial tone, etc. The personal computer provides a simple graphical display that allows users to enter the telephone numbers of each party and to point and click to add and drop people. In addition, the personal computer can provide status information on each participant to determine if they are still connected to the bridge.

This is accomplished when the subscriber at step 701 activates the personal computer 112 and clicks on an entry at step 702 indicating selection of the conference call feature. At step 703, the script programmed into personal computer 112 executes the conference call accessing process and a data message is transmitted via Asymmetric Digital Subscriber Line 113 data channel to the Digital Subscriber Line Access Multiplexer. The Digital Subscriber Line Access Multiplexer at step 704 forwards the received data message via data link 125 and ATM network 121 to conference call server 130. At step 705, the conference call server 130 responds to the received data message indicative of a subscriber activation of the conference call feature by transmitting an inquiry relating to the identities of the conference participants to the subscriber's personal computer 112 over the data transmission path just described which links the personal computer 112 with the conference call server 130. The subscriber selects entries from the subscriber's telephone directory and/or enters telephone numbers at step 706, and the selections are transmitted to the conference call server 130 which generates a call to the subscriber telephone station set 111 at step 707 via associated communications switch 101. The communications switch 101 establishes a voice communication connection from conference call server 130 at step 708 to the subscriber's telephone station set 111 via Asymmetric Digital Subscriber Line 113. When the subscriber goes off hook on telephone station set 111 at step 709 in response to the incoming call from conference call server 130, the conference call server 130 at step 710 then automatically generates outgoing calls to the other conference call participants selected by the subscriber. The subscriber at step 711 can transmit commands to conference call server 130 via the data link portion of the Asymmetric Digital Subscriber Line 113 to delete or add conference participants. At step 712, the conference call server 130 executes the commands received from the subscriber personal computer 112 and at step 713 determines the status of the conference call participants and advises the subscriber via a data message to the personal computer 112. Processing then returns to step 711 until the conference call completes and processing exits at step 714.

### Summary

The Integrated voice and data call management system uses the subscriber's existing basic telephone station set and the subscriber's personal computer to provide the subscriber with access to both advanced communication services and the data which relates to these advanced communication services. This is accomplished by enhancing the voice features provided for the telephone station set with the Asymmetric Digital Subscriber Line data transmission capability. This call management system unifies multiple service needs in the field of concurrent voice and data communication capabilities, by managing the voice and data communication suites as a set of integrated capabilities. The subscriber can additionally program call management features into the system to address the unique needs of the subscriber, since the communication services data is available to the subscriber.

## Claims

1. A call management system for use with a communication medium that supports concurrent voice and data communication connections to a communications network, for enabling a subscriber to access advanced voice call management features for their telephone station set, which uses the voice communication connection capability of said communication medium, via a data terminal, which uses the data communication connection capability of said communication medium, comprising:
means, connected to said communications network, for exchanging call connection data between said subscriber data terminal and said communications network; and
means for processing said call connection data to enable said subscriber to manage said voice communication connection capability of said communication medium via said subscriber data terminal.

2. The call management system of claim 1 wherein said means for processing comprises:
means, responsive to data received from said subscriber data terminal, via said data communication connection capability of said communication medium, indicative of a designated destination, for transmitting data to said communications network to originate a voice communication connection from said subscriber telephone station set, via said voice communication connection capability of said communication medium, to said designated destination.

3. The call management system of claim 2 wherein said means for processing further comprises:
means for storing a directory of designated destinations for said subscriber.

4. The call management system of claim 1 wherein said means for processing comprises:
means, responsive to data received from said communications network indicative of an incoming call to said subscriber telephone station set from a calling party connected to said communications network, for transmitting data to said subscriber data terminal, via said data communication connection capability of said communication medium, identifying said calling party.

5. The call management system of claim 4 wherein said means for processing further comprises:
means, responsive to data received from said subscriber data terminal, subsequent to said transmission of data to said subscriber data terminal identifying said calling party, via said data communication connection capability of said communication medium, indicative of a designated destination, for transmitting data to said communications network to transfer said incoming call from said calling party to said designated destination.

6. The call management system of claim 4 wherein said means for processing further comprises:
means, responsive to said subscriber telephone station set being off hook and data being received from said subscriber data terminal, via said data communication connection capability of said communication medium, indicative of a designated destination, for transmitting data to said communications network to transfer said incoming call from said calling party to said designated destination.

7. The call management system of claim 1 wherein said means for processing comprises:
means, responsive to data received from said subscriber data terminal, via said data communication connection capability of said communication medium, indicative of a request to access voice mail, for transmitting data from a voice mail system of said communications network to said subscriber data terminal, via said data communication connection capability of said communication medium, indicative of voice mail messages received for said subscriber by said voice mail system.

8. The call management system of claim 7 wherein said means for processing further comprises:
means, responsive to data received from said subscriber data terminal, via said data communication connection capability of said communication medium, indicative of a request to access a one of said voice mail messages received for said subscriber by said voice mail system, for transmitting data to said communications network to originate a voice communication connection from said subscriber telephone station set, via said voice communication connection capability of said communication medium, to said voice mail system to enable said voice mail system to transmit said one of said voice mail messages to said subscriber telephone station set via said voice communication connection capability of said communication medium.

9. A method of operating a call management system for use with a communication medium that supports concurrent voice and data communication connections to a communications network, for enabling a subscriber to access advanced voice call management features for their telephone station set, which uses the voice communication connection capability of said communication medium, via a data terminal, which uses the data communication connection capability of said communication medium, comprising the steps of:
exchanging call connection data between said subscriber data terminal and said communications network; and
processing said call connection data to enable said subscriber to manage said voice communication connection capability of said communication medium via said subscriber data terminal.

10. The call management system of claim 9 wherein said step of processing comprises:
transmitting, in response to data received from said subscriber data terminal, via said data communication connection capability of said communication medium, indicative of a designated destination, data to said communications network to originate a voice communication connection from said subscriber telephone station set, via said voice communication connection capability of said communication medium, to said designated destination.

11. The method of operating a call management system of claim 10 wherein said step of processing further comprises:
storing in a memory a directory of designated destinations for said subscriber.

12. The method of operating a call management system of claim 1 wherein said step of processing comprises:
transmitting, in response to data received from said communications network indicative of an incoming call to said subscriber telephone station set from a calling party connected to said communications network, data to said subscriber data terminal, via said data communication connection capability of said communication medium, identifying said calling party.

13. The method of operating a call management system of claim 12 wherein said step of processing further comprises:
transmitting, in response to data received from said subscriber data terminal, subsequent to said transmission of data to said subscriber data terminal identifying said calling party, via said data communication connection capability of said communication medium, indicative of a designated destination, data to said communications network to transfer said incoming call from said calling party to said designated destination.

14. The method of operating a call management system of claim 12 wherein said step of processing further comprises:
transmitting, in response to said subscriber telephone station set being off hook and data being received from said subscriber data terminal, via said data communication connection capability of said communication medium, indicative of a designated destination, data to said communications network to transfer said incoming call from said calling party to said designated destination.

15. The method of operating a call management system of claim 9 wherein said step of processing comprises:
transmitting, in response to data received from said subscriber data terminal, via said data communication connection capability of said communication medium, indicative of a request to access voice mail, data from a voice mail system of said communications network to said subscriber data terminal, via said data communication connection capability of said communication medium, indicative of voice mail messages received for said subscriber by said voice mail system.

16. The method of operating a call management system of claim 15 wherein said step of processing further comprises:
transmitting, in response to data received from said subscriber data terminal, via said data communication connection capability of said communication medium, indicative of a request to access a one of said voice mail messages received for said subscriber by said voice mail system, data to said communications network to originate a voice communication connection from said subscriber telephone station set, via said voice communication connection capability of said communication medium, to said voice mail system to enable said voice mail system to transmit said one of said voice mail messages to said subscriber telephone station set via said voice communication connection capability of said communication medium.

17. A call management system for use with an asynchronous digital subscriber line that supports concurrent voice and data communication connections to a public switched telephone network, for enabling a subscriber to access advanced voice call management features for their telephone station set, which uses the voice communication connection capability of said asynchronous digital subscriber line, via a personal computer, which uses the data communication connection capability of said asynchronous digital subscriber line, comprising:
data network means, connected to said public switched telephone network, for exchanging call connection data between said subscriber data terminal, using said data communication connection capability of said asynchronous digital subscriber line, and communication connection switching control apparatus of said public switched telephone network; and
data network server means, connected to said data network means, for processing said call connection data to enable said subscriber to manage said voice communication connection capability of said asynchronous digital subscriber line for said subscriber telephone station set via said subscriber personal computer.

18. The call management system of claim 17 wherein said data network server means comprises:
memory means for storing a directory of designated destination data for said subscriber; and
message processing means, responsive to data received from said subscriber personal computer, via said data communication connection capability of said asynchronous digital subscriber line, indicative of said subscriber selecting one of said designated destination data stored in said memory means, for transmitting data to said public switched telephone network to originate a voice communication connection from said subscriber telephone station set, via said voice communication connection capability of said asynchronous digital subscriber line, and said public switched telephone network to said designated destination.

19. The call management system of claim 17 wherein said data network server means comprises:
incoming call alerting means, responsive to data received from said public switched telephone network indicative of an incoming call to said subscriber telephone station set from a calling party connected to said public switched telephone network, for transmitting data to said subscriber data terminal, via said data communication connection capability of said asynchronous digital subscriber line, identifying said calling party.

20. The call management system of claim 19 wherein said means for processing further comprises:
call forwarding means, responsive to data received from said subscriber data terminal, subsequent to said transmission of data to said subscriber data terminal identifying said calling party, via said data communication connection capability of said asynchronous digital subscriber line, indicative of a designated destination, for transmitting data to said public switched telephone network to transfer said incoming call from said calling party to said designated destination.
